(19) **Europäisches Patentamt**
**European Patent Office**
**Office européen des brevets**

(11) Veröffentlichungsnummer: **0 307 428 B1**

(12) **EUROPÄISCHE PATENTSCHRIFT**

(45) Veröffentlichungstag der Patentschrift:
**24.07.91 Patentblatt 91/30**

(51) Int. Cl.⁵: **B23D 61/18, // F16G11/08**

(21) Anmeldenummer: **88902415.4**

(22) Anmeldetag: **23.03.88**

(86) Internationale Anmeldenummer:
**PCT/DE88/00182**

(87) Internationale Veröffentlichungsnummer:
**WO 88/07427 06.10.88 Gazette 88/22**

(54) **SÄGEWERKZEUG.**

Teilanmeldung 90118250.1 eingereicht am
23/03/88.

(30) Priorität: **24.03.87 DE 3709607**
**13.06.87 DE 3719855**
**22.02.88 DE 3805405**

(43) Veröffentlichungstag der Anmeldung:
**22.03.89 Patentblatt 89/12**

(45) Bekanntmachung des Hinweises auf die
Patenterteilung:
**24.07.91 Patentblatt 91/30**

(84) Benannte Vertragsstaaten:
**AT BE CH DE FR GB IT LI LU NL SE**

(56) Entgegenhaltungen:
**DE-A- 1 949 194**
**DE-A- 2 014 437**
**FR-A- 2 249 754**
**GB-A- 15 752**
**GB-A- 759 505**

(73) Patentinhaber: **MVZ MASCHINENBAU UND**
**VERZAHNUNGSTECHNIK, JOHANNES**
**FALKENSTEIN**
**Zeppelinstrasse 16**
**W-7953 Bad Schussenried (DE)**

(72) Erfinder: **FALKENSTEIN, Johannes**
**Zeppelinstrasse 16**
**W-7953 Bad Schussenried (DE)**

(74) Vertreter: **Patentanwälte Dipl.-Ing. E. Eisele**
**Dr.-Ing. H. Otten**
**Seestrasse 42**
**W-7980 Ravensburg (DE)**

## Beschreibung

Die Erfindung betrifft ein Sägewerkzeug zur Verwendung an einer Bandsägemaschine o.dgl. nach dem Oberbegriff des Anspruchs 1.

Ein Sägewerkzeug mit Schneidelementhülsen zur Verwendung an einer Bandsägemaschine ist aus der DE 24 51 153 C2 bekannt geworden.

Bei der Bearbeitung von Konturen von Grabsteinen o.dgl. erfolgt das Einbringen einer Ausnehmung bzw. eines Lochs in eine Steinplatte z.B. dadurch, daß man längs der Lochkontur eine Bohrung neben die andere setzt und das Innenteil damit herausbricht. Auch mittels Fingerfräser kann die Lochkontur durch einen zeitaufwendigen Bearbeitungsvorgang ausgefräst werden. Diese Bearbeitungsmethode ist jedoch zeitaufwendig und im Ergebnis unbefriedigend.

Die Verwendung von endlosen Sägeseilen an Bandsägemaschinen zur Bearbeitung von Konturen von Grabsteinen o.dgl. ist ebenfalls bekannt (GB-A-15 752). Um Innenkonturen bearbeiten zu können, führt man das mittels eines Seilverschlusses geöffnete Seil durch ein Loch und verschließt dieses mittels des Verschlusses.

Sägewerkzeuge mit einem Drahtseil als Kern haben den Vorteil, daß sie in ihrem Durchmesser sehr klein gehalten werden können und damit zur Bearbeitung feinster Konturen geeignet sind. Um eine gewisse Flexibilität zu behalten, darf das Seil jedoch nicht durchgehend mit einer z.B. galvanisch aufgebrachten Diamantbeschichtung versehen sein, da dieses bei einer Umlenkung bei einer Bandsägemaschine, d.h. einer stetigen Beanspruchung auf Biegung zerstört werden würde. Deshalb weisen derartige Sägeseile eine in Abständen angeordnete Diamantbeschichtung auf, die im allgemeinen durch auf das Seil aufgeschobene, diamantbeschichtete Schneidhülsen oder Schneidperlen erhalten wird (DE 24 51 153 C2). Dabei können die Schneidhülsen oder Schneidperlen durch Aufquetschen, d.h. durch mechanische Verformung auf das Drahtseil, aufgeklemmt werden, was jedoch zu einer Beschädigung des Drahtseiles und damit zu einem vorzeitigen Verschleiß bzw. Bruch des Seiles führen kann. Der Zwischenraum zwischen den Schneidperlen wird durch Abstandshülsen oder einzelnen Abstützfedern ausgefüllt. Gemäß der DE 24 51 153 C2 können die Schneidhülsen auch in einer um das Seil angeordneten Kunststoffummantelung eingebettet sein.

Der Erfindung liegt die Aufgabe zugrunde, ein für die Bearbeitung von Konturen in gesteinsartigen Materialien verbessertes Sägewerkzeug zur Verfügung zu stellen, wobei das Sägeseil eine hohe Lebensdauer, einen ruhigen, vibrationsarmen Lauf und eine einfache Möglichkeit zur Reparatur aufweisen soll.

Diese Aufgabe wird ausgehend von einem Sägewerkzeug der einleitend bezeichneten Art erfindungsgemäß durch die kennzeichnenden Merkmale des Anspruchs 1 gelöst. Durch die in den Unteransprüchen aufgeführten Maßnahmen ist eine zweckmäßige und vorteilhafte Weiterbildung des im Hauptanspruch angegebenen Sägewerkzeugs möglich.

Das erfindungsgemäße Sägewerkzeug sieht vor, daß das über einen Verschluß verbundene endlose Drahtseil komplett von einer Drahtspirale umgeben ist, die an ihrem Umfang, in Abständen zueinander, diamantbeschichtete Segmentstücke aufweist. Die z.B. galvanisch aufgebrachte Diamantschicht trägt nur wenige zehntel Millimeter auf die Drahtspirale auf, so daß ein nahezu im Durchmesser gleichmäßiges Drahtseil geschaffen wird.

Durch die Drahtspirale kann der Außendurchmessers des erfindungsgemäßen Sägewerkzeugs noch weiter verkleinert werden, da die Drahtspirale in ihrem Außendurchmesser kleiner gehalten werden kann, als eine aufzubringende Hülse. Weiterhin ist eine Reparatur des Sägewerkzeugs bei einem Bruch des innenliegenden Drahtseils außerordentlich einfach möglich. Das Drahtseil wird lediglich aus der Drahtspirale herausgezogen und ein neues, intaktes Drahtseil eingesetzt und mit Verschlußelementen versehen.

Eine Weiterbildung der Erfindung sieht vor, daß auch die separate Gewindehülse bzw. Verschlußhülse diamantbeschichtet ist, um als zusätzliches Schneidelement zu dienen.

In Weiterbildung der Erfindung wird ein Kunststoffüberzug über das komplette Sägewerkzeug gezogen, so daß es auch die Schneidelemente mitumfaßt. So sind die empfindlichen Diamantbeläge beim Transport geschützt und können auch keine Verletzungen hervorrufen. Erst im Schneideinsatz wird die sehr dünne Kunststoffschicht abgerieben und der Diamantbelag auf den Schneidhülsen kommt zum Vorschein.

Ein vorteilhaftes und zweckmäßiges Ausführungsbeispiel der Erfindung ist in der Zeichnung dargestellt und in der nachfolgenden Beschreibung naher erläutert. Es zeigen

Fig. 1    ein Ausführungsbeispiel mit Drahtspirale und aufgebrachten Schneidsegmentstücken sowie mit Nut- und Federverdrehsicherung des geöffneten Verschlusses,

Fig. 2    eine Darstellung gemäß Fig. 1 in geschlossenem Zustand des Verschlusses und

Fig. 3    eine Darstellung nach Fig. 2 mit zusätzlichem gestrichelt angedeuteten Kunststoffüberzug.

Generell erstreckt sich die Erfindung auf die Verwendung des erfindungsgemäßen Sägeseils an einer nicht näher dargestellten Bandsägemaschine zur Herstellung von Konturen, insbesondere Innenkonturen in Gesteinsmaterialien, wobei das Sägeseil über einen Verschluß zu öffnen ist.

Das erfindungsgemäße Sägeseil (1) weist zwei Seilenden (2, 3) auf, die mittels eines Verschlusses (4) miteinander zur Bildung eines ringförmigen, endlosen Seils verbunden sind. Dieses Seil kann dann auf die angepaßten Scheiben einer nicht näher dargestellten Bandsägemaschine mit Antriebsrolle und Umlenkrolle aufgelegt werden.

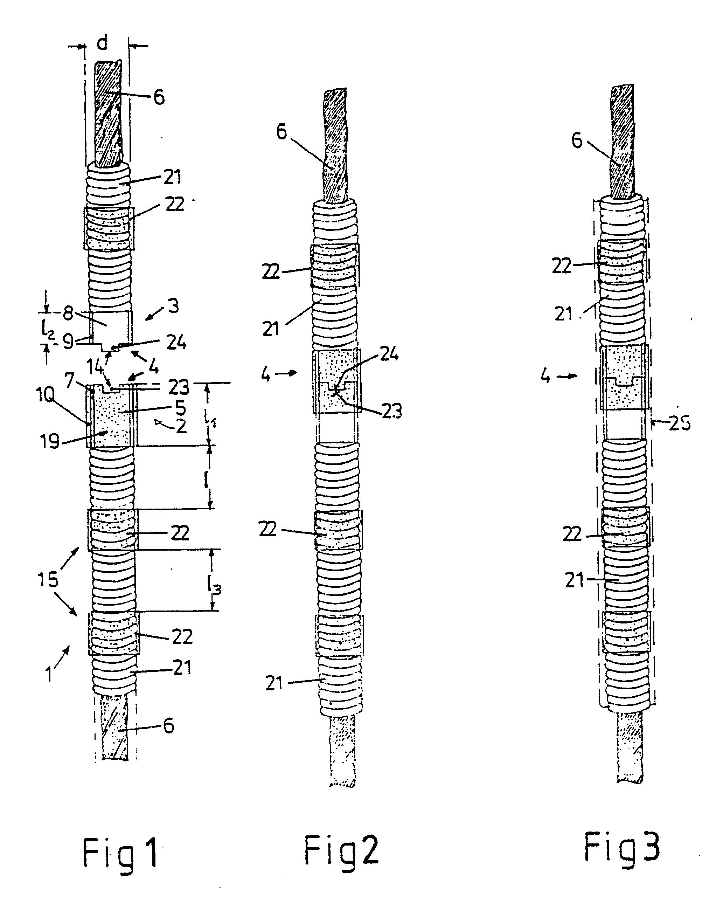

Zur Bildung des Verschlusses (1) weist das in Fig. 1 dargestellte untere Seilende (2) — im weiteren erstes Seilende (2) genannt — eine Gewindehülse (5) auf, die auf das eigentliche Seil (6) fest aufgequetscht oder aufgelötet ist. Die Gewindenülse (5) weist ein längeres Gewinde (7) mit der Länge $l_1$ auf.

Gleichermaßen weist das in Fig. 1 dargestellte obere Seilende (3) — im weiteren zweites Seilende genannt — eine Gewindehülse (8) auf, die ebenfalls fest auf das Seil (6) aufgebracht ist. Die Gewindehülse (8) weist ein kürzeres Gewinde (9) auf, dessen Länge $l_2$ etwa halb so lang ist wie die Länge $l_1$ des Gewindes (7) der Gewindehülse (5).

Die beiden Seilenden (2, 3) mit ihren Gewindehülsen (5, 8) werden mittels der separaten Gewindehülse (10) — im weiteren Verschlußhülse genannt — verbunden. Dabei sind alle Gewinde der Teile (5, 8, 10) als gleichdrehende Gewinde, z.B. Linksgewinde oder Rechtsgewinde ausgebildet. Die Länge der Verschlußhülse (10) ist etwas länger als die Länge $l_1$ des Gewindes (7) der ersten Gewindehülse (5).

Das äußerste Ende des ersten Seilendes (2) sowie das äußerste Seilende des zweiten Seilendes (3) weisen im zusammengeschraubten Zustand einen geringen Abstand zueinander auf. Durch diesen gebildeten Zwischenraum kann ein Sicherungselement, z.B. ein Stift, Bolzen, Draht, Dorn o.dgl., geführt werden, das ein ungewolltes Öffnen des Verschlusses (4) verhindert. Anstelle eines solchen Sicherungselementes kann gemäß der Darstellung nach Fig. 1 ein Sicherungselement (14) als Verdrehsicherung der beiden Seilenden (2, 3) dadurch herbeigeführt werden, daß das untere Seilende (2) eine Nut (23) und das obere Seilende (3) eine Feder (24) aufweist, die ineinandergeschoben eine verdrehgesicherte Verbindung (14), wie in Fig. 2 dargestellt, bilden.

Der Verschlußmechanismus des Verschlusses (4) arbeitet wie folgt :

Die Verschlußhülse (10) wird zunächst auf das längere Gewinde (7) der ersten Gewindehülse (5) des ersten (in Fig. 1 unteren) Seilendes (2) aufgeschraubt. Dabei ist die Länge des Gewindes der Verschlußhülse (10) derart bemessen, daß sie zumindest größer ist als die Länge $l_1$ des Gewindes (7) der ersten Gewindehülse (5).

Sodann setzt man das zweite Ende (3) (oberes Seilende) gegen das offene Ende der Verschlußhülse (10) und dreht diese wieder von dem Gewinde (7) herunter, unter gleichzeitigem Aufdrehen auf das Gewinde (9) der zweiten Gewindehülse (8).

Das Gewinde (9) der zweiten Gewindehülse (8) weist eine Länge $l_3$ auf, die etwa halb so groß ist als die Länge $l_1$ des ersten Gewindes (7). Ist nun die Verschlußhülse (10) auf das zweite Gewinde (9) aufgeschraubt, so belegen die beiden Gewinde (7 und 9) gleich viel Gewindegänge der Verschlußhülse (10). Die Verschlußhülse ist damit genau symmetrisch auf den beiden Seilenden (2, 3) angeordnet. Die Verschlußkraft des Verschlusses (4) wird durch den Anschlag der Verschlußhülse (10) am Ende des Gewindes (9) der zweiten Gewindehülse (8) bewirkt.

Zur Sicherung des Verschlusses (4) kann ein stiftförmiges Sicherungselement (14) in einen Zwischenraum zwischen den Seilenden innerhalb des Verschlusses eingebracht werden. Dies kann z.B. ein diagonal durchgreifender Stift sein. Hierdurch kann die Verschlußhülse (10) sich maximal bis zum Anschlag des Sicherungselements an der oberen Fläche des Seilendes verdrehen.

Bei dem Verschluß (4) in Fig. 1 und 2 erübrigt sich ein zusätzlicher Sicherungsstift, da die Verdrehsicherung durch die Längsnut (23) mit Feder (24) an den beiden Seilenden (2, 3) bewerkstelligt wird. Die Nut und Federverbindung (23, 24) sind nicht kreiszylindrisch, sondern rechteckig oder quadratisch im Querschnitt ausgebildet, damit diese verdrehsicher sind.

Bei der Ausführungsform des Sägewerkzeug nach Fig. 1 und 2 wird auf das Seil (6) eine Drahtspirale (21) aufgezogen, die diamantbeschichtete Segmentstücke (22) in gleichbleibenden Abständen $l_3$ aufweist. Die auf die Drahtspirale (21) z.B. galvanisch aufgebrachte Diamantbeschichtung weist lediglich eine Dicke von wenigen zehntel Millimeter auf, d.h. das Sägewerkzeug weist einen nahezu gleichbleibenden Außendurchmesser über die gesamte Länge auf. Dies führt zu dem gewünschten vibrationsarmen Umlauf. Die Drahtspirale (21) ist auf der gesamten Länge des Drahtseils (6) aufgezogen, so daß in Fig. 1 und 2 das innere Drahtseil (6) komplett umschlossen ist. Im Bereich des Seilverschlusses (4) ist die Drahtspirale (21) in den Verschluß eingeklemmt, eingelötet oder auf sonstiger geeigneter Weise befestigt.

Die Darstellung in Fig. 1 zeigt den geöffneten, in Fig. 2 den geschlossenen Zustand des Verschlusses (4). In der Darstellung in Fig. 3 ist das komplette Seil noch mit einem zusätzlichen Kunststoffüberzug (25) versehen,

3

der als Transportschutz vorgesehen ist. Der Diamantbelag (22) schleift sich im Betrieb nach wenigen Umdrehungen frei, so daß der Kunststoffüberzug in diesem Bereich sofort entfernt ist.

Die Drahtspirale (21) wird über das Seile (6) aufgezogen und kann beispielsweise bei einem Bruch des Seils (6) ohne weiteres wiederverwendet werden. Hierzu wird das gebrochene Seil (6) aus der Drahtspirale (21) herausgezogen und durch ein neues Drahtseil (6) ersetzt. Die Verwendung eines Seils (6) mit übergezogener Drahtspirale (21) hat zur Folge, daß das Seil (6) keinerlei Schwächung durch aufgequetschte Schneidhülsen erfahrt, d.h. es werden jegliche Kerbspannungen und damit Bruchgefahr vermieden. Vorteilhaft ist weiterhin, daß das Sägewerkzeug noch exakter und vibrationsärmer umläuft und daß ein nahezu nahtloser Übergang des dünnen Diamantbelags (22) zur Drahtspirale (21) erfolgt. Die Flexibilität des Sägewerkzeugs bleibt in vollem Umfang erhalten, da die Spirale nur segmentiert beschichtet ist. Die Spirale kann als Meterware sehr kostengünstig bereitgestellt werden und sie bestimmt gleichzeitig den Abstand $l_3$ der einzelnen Segmentstücke (22).

In der Darstellung nach Fig. 1 bis 3 kann die Verschlußhülse (10) ebenfalls mit einem Diamantüberzug (19) versehen werden, um als Schneidelement zu dienen. Im übrigen muß der Verschluß (4) in seinem Außendurchmesser sehr klein gehalten werden, um nahezu mit dem Außendurchmesser (d) der Drahtspirale (21) zuzüglich der aufgebrachten Diamantschicht zu fluchten.


**Patentansprüche**

1. Sägewerkzeug zur Verwendung an einer Bandsägemaschine o.dgl. zur Bearbeitung von gesteinsartigen Materialien, bestehend aus einem Sägeseil (1), dessen Verschluß (4) durch zwei Gewinde (7, 9) an den Seilenden (2, 3) und einer darauf angeordneten Verschlußhülse (10) gebildet ist, mit in Abstand zueinander angeordneten, diamant-, hartmetall- oder keramik-beschichteten Schneid- bzw. Schleifelementen (22), dadurch gekennzeichnet, daß die Schneid- bzw. Schleifelemente (22) in Abständen $l_3$ zueinander auf einer, das Seil (6) über die ganze Länge überziehenden Spirale (21) angeordnet sind, wobei die Spirale (21) vom Seil abziehbar ist.

2. Sägewerkzeug nach Anspruch 1, dadurch gekennzeichnet, daß die Schneid- bzw. Schleifelemente (22) als diamant-, hartmetall- oder keramik-beschichtete Schneidstücke (22) ausgebildet sind, die auf die Spirale (21) durch Beschichtung aufgebracht sind.

3. Sägewerkzeug nach Anspruch 1, dadurch gekennzeichnet, daß die Drahtspirale (21) im Bereich des Seilverschlusses (4) eingeklemmt oder eingelötet ist.

4. Sägewerkzeug nach Anspruch 1, dadurch gekennzeichnet, daß der Seilverschluß (4) ebenfalls mit einer Diamant-, Hartmetall- oder Keramik-Beschichtung versehen ist.

5. Sägewerkzeug nach Anspruch 1, dadurch gekennzeichnet, daß das komplette Sägewerkzeug mit Spirale (21) und Schneid- bzw. Schleifelementen (22) auf der Spirale (21) sowie auf dem Verschluß (4) mit einem Kunststoffüberzug (25) versehen ist, wobei der Kunststoffüberzug (25) im Bereich der Schneidelemente (22, 19) im Betrieb abtragbar ist.

6. Sägewerkzeug nach Anspruch 1, dadurch gekennzeichnet, daß an dem Sägeseil (1) ein längeres (7) und ein kürzeres (9) jeweils gleichläufiges Gewinde (7, 9) zur Aufnahme der Gewinde- bzw. Verschlußhülse (10) vorgesehen sind, wobei die separate Hülse (10) des Verschlusses (4) nahezu mit seiner gesamten Länge auf das Gewinde (7) des ersten Seilendes (2) aufschraubbar ist und das Verschließen der beiden Seilenden (2, 3) durch Zurückdrehen der Verschlußhülse (10) vom ersten Gewinde (7) des ersten Seilendes (2) unter gleichzeitigem Aufschrauben auf das zweite Gewinde (9) des zweiten Seilendes (3) erfolgt.

7. Sägewerkzeug nach Anspruch 6, dadurch gekennzeichnet, daß zur Sicherung des Verschlusses (4) ein Sicherungselement wie Stift, Draht, Bolzen, Dorn o.dgl. durch die Gewindehülse (10) geführt ist, wobei das Sicherungselement zwischen den Enden des Seils (6) zu liegen kommt, oder daß die beiden zusammenfügbaren Endstücke (2, 3) eine ineinandergreifende, im Querschnitt quadratische Nut-Feder-Verbindung (23, 24) als Verdrehsicherung aufweisen.

8. Sägewerkzeug nach Anspruch 6 oder 7, dadurch gekennzeichnet, daß die Gewindehülse (10) als Schneidelement ausgebildet ist und eine Diamantbeschichtung (19) o.dgl. aufweist.

9. Sägewerkzeug nach einem oder mehreren der vorhergehenden Ansprüchen, dadurch gekennzeichnet, daß die in Abständen $l_3$ auf dem Seil (6) angeordneten diamantbeschichteten Schneidelemente (22) fest am Seil (6) in ihrer Lage angeordnet sind, daß die Gewindehülse (22) und die Schneidelemente (22) etwa den gleichen Außendurchmesser aufweisen.

10. Sägewerkzeug nach einem oder mehreren der vorhergehenden Ansprüchen, dadurch gekennzeichnet, daß ein Kunststoffüberzug (25) die Schneidelemente (22) sowie die Drahtspirale (21) zunächst komplett umschließt, wobei der Kunststoffüberzug (25) im Bereich der Schneidelemente (19, 22) im Betrieb abtragbar

4

EP 0 307 428 B1

ist.

## Claims

1. Saw-tool for use on a band saw machine or the like for machining stone-like materials, consisting of a saw cable (1), the closure (4) of which is formed of two threads (7, 9) at the ends (2, 3) of the cable and a closure sleeve (10) fitted thereon, the tool comprising, spaced at intervals, cutting or grinding elements (22) coated with diamond, hard metal or ceramic, characterized in that the cutting or grinding elements (22) are disposed at spacings $l_3$ from one another on a helix (21) covering the cable (6) over its entire length, the helix (21) being able to be pulled off the cable.

2. Saw-tool according to Claim 1, characterized in that the cutting or grinding elements (22) are formed as cutting pieces (22) coated with diamond, hard metal or ceramic, witch (cutting pieces) are applied onto the helix (21) by coating.

3. Saw-tool according to Claim 1, characterized in that the wire helix (21) is clamped in or soldered in in the region of the cable closure (4).

4. Saw-tool according to Claim 1, characterized in that the cable closure (4) is also provided with a diamond, hard metal or ceramic coating.

5. Saw-tool according to Claim 1, characterized in that the complete saw-tool comprising helix (21) and cutting or grinding elements (22) is provided with a plastics covering (25) on the helix (21) and on the closure (4), the plastics covering (25) being able to be worn away in use in the region of the cutting elements (22; 19).

6. Saw-tool according to Claim 1, characterized in that, on the saw cable (1), a longer (7) and a shorter (9) thread, each of the same hand, are provided for receiving the threaded or closure sleeve (10), wherein the separate sleeve (10) of the closure (4) can be screwed almost with its entire length onto the thread (7) of the first cable end (2) and the closing of the two cables ends (2, 3) is effected by rotating back the closure sleeve (10) from the first thread (7) of the first cable end (2) while simultaneously screwing it onto the second thread (9) of the second cable end (3).

7. Saw-tool according to Claim 6, characterized in that, for securing the closure (4), a securing element such as a pin, wire, bolt, mandrel or the like is guided through the threaded sleeve (10), the securing element becoming situated between the ends of the cable (6), or in that the two end pieces (2, 3) which can be joined together possess a mutually engaging tongue-and-groove connection (23, 24) of square cross-section as anti-rotation securing element.

8. Saw-tool according to Claim 6 or 7, characterized in that the threaded sleeve (10) is formed as a cutting element and possesses a diamond coating (19) or the like.

9. Saw-tool according to one or more of the preceding Claims, characterized in that the diamond-coated cutting elements (22), disposed at spacings $l_3$ on the cable (6), are mounted fixed in their position on the cable (6), and that the threaded sleeve (22) and the cutting elements (22) have approximately the same external diameter.

10. Saw-tool according to one or more of the preceding Claims, characterized in that a plastics covering (25) initially completely surrounds the cutting elements (22) and the wire helix (21), the plastics covering (25) being capable of being worn off in use in the region of the cutting elements (19, 22).

## Revendications

1. Outil de sciage utilisable dans une scie à ruban, pour le traitement de matériaux du type roche, constitué d'un câble de sciage (1), dont le raccord (4) est formé par deux filetages (7, 9) aux extrémités (2, 3) du câble et par un manchon (10) agencé sur ceux-ci, comportant des éléments de coupe ou de meulage (22), agencés à une certaine distance l'un de l'autre, revêtus de céramique, de métal dur ou de diamant, caractérisé en ce que les éléments de coupe ou de meulage (22) sont agencés à des distances $l_3$ l'un de l'autre sur une spirale (21) recouvrant le câble (6) sur toute sa longueur, la spirale (21) pouvant être retirée du câble.

2. Outil de sciage selon la revendication 1, caractérisé en ce que les éléments de coupe ou de meulage (22) sont réalisés en tant que pièces de coupe (22) revêtues de céramique, de métal dur ou de diamant, qui sont rapportées sur la spirale (21) par enduction.

3. Outil de sciage selon la revendication 1, caractérisé en ce que la spirale de fil métallique (21) est coincée ou soudée dans la zone du raccord de câble (4).

4. Outil de sciage selon la revendication 1, caractérisé en ce que le raccord de câble (4) est muni de même d'un enrobage de céramique, de métal dur ou de diamant.

5

5. Outil de sciage selon la revendication 1, caractérisé en ce que l'outil de sciage complet avec la spirale (21) et les éléments de coupe ou de meulage (22) sur la spirale (21), ainsi que sur le raccord (4), est muni d'un revêtement (25) de matière synthétique, le revêtement (25) de matière synthétique pouvant être enlevé en service dans la zone des éléments de coupe (22, 19).

6. Outil de sciage selon la revendication 1, caractérisé en ce que, sur le câble de sciage (1), sont prévus un filetage plus long (7) et un filetage plus court (9), à chaque fois de même sens, pour la réception du manchon de raccordement (10), le manchon séparé (10) du raccord (4) pouvant être vissé pratiquement sur toute sa longueur sur le filetage (7) de la première extrémité de câble (2), et le raccordement des deux extrémités de câble (2, 3) ayant lieu par rotation inverse du manchon (10) sur le premier filetage (7) de la première extrémité de câble (2) en le vissant en même temps sur le second filetage (9) de la seconde extrémité de câble (3).

7. Outil de sciage selon la revendication 6, caractérisé en ce que, pour assurer le raccord (4), un élément de sécurité, comme une broche, un fil métallique, un boulon, un goujon ou analogue, est guidé à travers le manchon (10), l'élément de sécurité parvenant entre les extrémités du câble (6), ou en ce que les deux extrémités (2, 3) qui peuvent être assemblées, présentent une liaison à languette et rainure (23, 24) s'engageant l'une dans l'autre, quadratique en section transversale, en tant que sécurité en torsion.

8. Outil de sciage selon la revendication 6 ou 7, caractérisé en ce que le manchon (10) est réalisé en tant qu'élément de coupe et présente un revêtement de diamant (19) ou analogue.

9. Outil de sciage selon une ou plusieurs des revendications précédentes, caractérisé en ce que les éléments de coupe (22) revêtus de diamant, agencés à des distances $l_3$ sur le câble (6) sont fixés en position sur le câble (6), en ce que le manchon (10) et les éléments de coupe (22) présentent à peu près le même diamètre externe.

10. Outil de sciage selon une ou plusieurs des revendications précédentes, caractérisé en ce qu'un revêtement de matière synthétique (25) entoure tout d'abord complètement les éléments de coupe (22) ainsi que la spirale (21), le revêtement de matière synthétique (25) pouvant être enlevé en service dans la zone des éléments de coupe (19, 22).

Fig 1

Fig 2

Fig 3